(19) Europäisches Patentamt
European Patent Office
Office européen des brevets

(11) EP 4 524 099 A1

(12) EUROPÄISCHE PATENTANMELDUNG

(43) Veröffentlichungstag:
19.03.2025 Patentblatt 2025/12

(21) Anmeldenummer: 23197090.6

(22) Anmeldetag: 13.09.2023

(51) Internationale Patentklassifikation (IPC):
$C01B\ 3/04^{(2006.01)}$ $B01J\ 35/55^{(2024.01)}$

(52) Gemeinsame Patentklassifikation (CPC):
C01B 3/047; B01J 23/462; B01J 23/58;
B01J 31/2208; B01J 35/40; B01J 35/55;
B01J 35/615; B01J 35/635; B01J 37/0201;
B01J 37/086; B01J 37/18

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
KH MA MD TN

(71) Anmelder: Heraeus Precious Metals GmbH & Co.
KG
63450 Hanau (DE)

(72) Erfinder:
• Casu, Santiago
  63450 Hanau (DE)
• Breuer, Christian
  63450 Hanau (DE)
• Krois, Konrad
  63450 Hanau (DE)

(74) Vertreter: Heraeus IP
Heraeus Business Solutions GmbH
Intellectual Property
Heraeusstraße 12-14
63450 Hanau (DE)

(54) **VERFAHREN ZUR HERSTELLUNG VON WASSERSTOFF MIT EINEM RUTHENIUM-HALTIGEN TRÄGERKATALYSATOR**

(57) Die vorliegende Erfindung betrifft ein Verfahren zur Herstellung von Wasserstoff aus einem Ammoniak-haltigem Gas mit einem Trägerkatalysator in Form eines mit Ruthenium-ausgestatteten Trägerkörpers, sowie die Verwendung eines solchen Ruthenium-haltigen Trägerkatalysators in einem Verfahren zur Herstellung von Wasserstoff. Das Verfahren umfasst das Bereitstellen eines Trägerkatalysators in Form eines mit Ruthenium-ausgestatteten Trägerkörpers, wobei der Trägerkörper als Trägermaterial ein refraktäres Oxid umfasst, zylinderförmig ist und mindestens drei voneinander beabstandete Kanäle aufweist, die sich vollständig durch den Trägerkörper erstrecken, wobei einer der Kanäle sich entlang einer zentralen Längsachse erstreckt.

Abbildung 1

EP 4 524 099 A1

**Beschreibung**

Die vorliegende Erfindung betrifft ein Verfahren zur Herstellung von Wasserstoff aus einem Ammoniak-haltigem Gas mit einem Trägerkatalysator in Form eines mit Ruthenium-ausgestatteten Trägerkörpers, sowie die Verwendung eines solchen Ruthenium-haltigen Trägerkatalysators in einem Verfahren zur Herstellung von Wasserstoff.

Die Gewinnung von Energie aus "grünen" Quellen hat in den letzten Jahren immer mehr an Bedeutung gewonnen. Insbesondere die Herstellung und Nutzung von Wasserstoff als sauberer Energieträger als Ersatz für fossile Brennstoffe ist Gegenstand intensiver Forschung.

Wasserstoff kann beispielsweise durch die Zersetzung von Ammoniak gewonnen werden:

$$2\ NH_3 \rightarrow 3\ H_2 + N_2$$

Bei dieser Reaktion fallen keine umweltschädlichen Nebenprodukte an, im Gegensatz zu Herstellmethoden, die auf fossilen Brennstoffen basieren.

Dank Vorteilen wie einer hohen Energiedichte, einer einfachen und etablierten Herstellung und Beförderung, sowie der langfristigen Speicherfähigkeit gilt Ammoniak als vielversprechender Wasserstoffträger. Bei der katalytischen Zersetzung von Ammoniak zur Herstellung von Wasserstoff können Edelmetallkatalysatoren (meist Ruthenium und/oder Platin basiert) oder Nichtedelmetallkatalysatoren (meist Eisen und/oder Nickel basiert) eingesetzt werden.

Da die Ammoniakspaltung eine endotherme Reaktion ist, wird sie bei hohen Temperaturen begünstigt. Mit den heute handelsüblichen Katalysatoren, typischerweise auf Nickel-Basis, können dafür Temperaturen von 700 - 900 °C erforderlich sein. Aus verfahrenstechnischer Sicht ist es vorteilhaft, die Temperatur so niedrig wie möglich zu halten, um den Energiebedarf für die Wärmeerzeugung zu reduzieren und die thermische Belastung der Reaktorsysteme gering zu halten.

Die Eignung von Ruthenium als katalytisch aktive Komponente für diese Reaktion ist lange bekannt, beispielsweise beschrieben Amano und Taylor schon 1954 die Eignung von auf Al2O3-geträgertem Ruthenium für diese Reaktion (J. Am. Chem. Soc. 1954, 76, 16, 4201-4204). Jedoch ist die katalytische Leistung vom Trägermaterial und der Form des Katalysators sowie dem Herstellungsverfahren abhängig, insbesondere von der eingesetzten Ruthenium-Vorläuferverbindung. Bekannte Katalysatoren weisen eine relativ hohe Metallbeladung auf und erfordern eine hohe Verfahrenstemperatur. Da Ruthenium ein teures Edelmetall ist, ist eine hohe Metallbeladung nicht wünschenswert.

Typischerweise wird zur Herstellung von Ruthenium-haltigen Trägerkatalysatoren ein Rutheniumchlorid als Ruthenium-Vorläuferverbindung eingesetzt. In der JP H1085601 A wird in diesem Zusammenhang beschrieben, dass derart hergestellte Katalysatoren gründlich gewaschen werden müssen, um den Halogengehalt auf ein mit dem Reaktorsystem kompatibles Maß zu reduzieren.

Auch der Einsatz von Katalysatoren in Form von mit Ruthenium ausgestatteten Trägerkörpern ist bekannt, beispielsweise aus der WO 2019188219 A1. Besonders geeignete Trägerkörper sind jedoch nicht offenbart. Wie in der vorliegenden Erfindung erkannt wurde, hat die Geometrie der eingesetzten Trägerkörper jedoch erheblichen Einfluss auf die Effizienz des Verfahrens.

Ein technisches Problem, das durch die vorliegende Erfindung gelöst werden soll, ist die Bereitstellung eines Verfahrens zur Herstellung von Wasserstoff aus einem Ammoniak-haltigen Gas, das bei niedrigen Betriebstemperaturen im Bereich von 450°C bis 650 °C durchgeführt werden kann.

Zudem war es Aufgabe, einen für ein solches Verfahren besonders geeigneten Trägerkatalysator bereitzustellen, der einen möglichst geringen Druckverlust verursacht und dadurch für die Anwendung in großskaligen Prozessen geeignet ist.

Außerdem war es Teil der Aufgabe, einen Trägerkatalysator bereitzustellen, der eine erhöhte Stabilität unter den Verfahrensbedingungen aufweist. Unter Stabilität ist in diesem Zusammenhang sowohl die thermische und chemische Stabilität der katalytisch aktiven Komponente, als auch die physische und thermomechanische Stabilität des Trägers und des gesamten Trägerkatalysators zu verstehen. Insbesondere sollte der Trägerkatalysator eine hohe mechanische Stabilität und ein geringes Abriebverhalten aufweisen.

Die Aufgaben werden zumindest teilweise gelöst durch ein Verfahren zur Herstellung von Wasserstoff aus einem Ammoniak-haltigen Gas, umfassend die folgenden Schritte

   i) Bereitstellen eines Trägerkatalysators in Form eines mit Ruthenium-ausgestatteten Trägerkörpers, wobei der Trägerkörper

-   als Trägermaterial ein refraktäres Oxid umfasst,
-   zylinderförmig ist und
-   mindestens drei voneinander beabstandete Kanäle aufweist, die sich vollständig durch den Trägerkörper erstrecken, wobei einer der Kanäle sich entlang einer zentralen Längsachse erstreckt,

ii) Kontaktieren des Trägerkatalysators mit dem Ammoniak-haltigen Gas.

Im Rahmen der vorliegenden Erfindung wurde überraschend festgestellt, dass die Verwendung eines Ruthenium-haltigen Trägerkatalysators, der in Form eines Trägerkörpers mit spezifischer Geometrie bereitgestellt wird, zumindest einige der im Stand der Technik identifizierten Probleme ganz oder teilweise löst.

Es wird angenommen, dass die Geometrie besagten Trägerkörpers einen günstigen Einfluss auf die Ammoniakzersetzung hat. Bei der Ammoniakzersetzung handelt es sich um eine volumenvergrößernde Reaktion (er erfolgt eine Verdopplung der Teilchenzahl: 2 Moleküle Ammoniak werden zu insgesamt 4 Molekülen - 3 Wasserstoff, 1 Stickstoff - umgesetzt). Denkbar ist, dass der vorteilhafte Einfluss des erfindungsgemäß verwendeten Trägerkatalysators durch eine Vergrößerung des zur Verfügung stehenden geometrischen Hohlraums des Katalysatorkörpers begründet sein könnte.

Insbesondere ist der erfindungsgemäß verwendete Trägerkatalysator besonders geeignet, da er im Verfahren einen vorteilhaften radialen Massentransport sowie einen geringen Druckverlust im Reaktor bewirkt.

Darüber hinaus hat ein Trägerkatalysator für die Ammoniakzersetzung gemäß der vorliegenden Erfindung ein vorteilhaftes Abriebverhalten sowie eine erhöhte mechanische Stabilität.

Außerdem weist das erfindungsgemäße Verfahren eine gute Ammoniakumwandlungsrate auf und hat somit eine verbesserte Leistung bei der Wasserstofferzeugung.

Das erfindungsgemäße Verfahren betrifft die Herstellung von Wasserstoff aus einem Ammoniak-haltigen Gas.

Unter einem Ammoniak-haltigen Gas wird hierbei ein Gas oder Gasgemisch verstanden, das 50 bis 100 Vol.-% Ammoniak enthält. Das Ammoniak-haltige Gas kann weitere Komponenten enthalten, die die Zersetzungsreaktion nicht beeinflussen, beispielsweise Inertgase wie Stickstoff, Helium oder Argon. Das Ammoniak-haltige Gas kann zum Beispiel bestehen aus 50 bis 100 Vol.-% Ammoniak, 0 bis 50 Vol.-% Helium, 0 bis 50 Vol.-% Argon, 0 bis 5 Vol.-% Wasser, 0 bis 20 Vol.-% Sauerstoff, 0 bis 50 Vol.-% Stickstoff, 0 bis 50 Vol.-% Wasserstoff und 0 bis 5 Vol.-% Verunreinigungen verschieden von Ammoniak, Helium, Argon, Wasser, Sauerstoff, Stickstoff und Wasserstoff, wobei die Summe der Vol.-% 100 Vol.-% beträgt.

Vorteilhafterweise enthält das Ammoniak-haltige Gas mindestens 70 Vol.-% Ammoniak, insbesondere mindestens 80 Vol.-%, besonders bevorzugt mindestens 90 Vol.-%.

Vorteilhafterweise enthält das Ammoniak-haltige Gas nicht mehr als 3 Vol.-% Wasser, insbesondere nicht mehr als 2 Vol.-%, besonders bevorzugt nicht mehr als 0,2 Vol.-%. Besonders bevorzugt kann das Ammoniak-haltige Gas auch wasserfrei sein.

Vorteilhafterweise enthält das Ammoniak-haltige Gas nicht mehr als 15 Vol.-% Sauerstoff, insbesondere nicht mehr als 10 Vol.-%, besonders bevorzugt nicht mehr als 5 Vol.-%. Insbesondere kann das Ammoniak-haltige Gas auch sauerstofffrei sein.

Das Ammoniak-haltige Gas kann bereits Stickstoff enthalten, bevorzugt beträgt der Anteil an Stickstoff nicht mehr als 40 Vol.-%, insbesondere nicht mehr als 20 Vol.-%, besonders bevorzugt nicht mehr als 10 Vol.-%, ganz besonders bevorzugt nicht mehr als 5 Vol.-%. Das Vorhandensein von Stickstoff kann besonders in der Anlaufphase des Verfahrens vorteilhaft sein. Das Ammoniak-haltige Gas kann auch stickstofffrei sein.

Das Ammoniak-haltige Gas kann bereits Wasserstoff enthalten, bevorzugt beträgt der Anteil an Wasserstoff nicht mehr als 40 Vol.-%, insbesondere nicht mehr als 30 Vol.-%, besonders bevorzugt nicht mehr als 10 Vol.-%. Das Ammoniak-haltige Gas kann auch wasserstofffrei sein.

Außerdem kann das Ammoniak-haltige Gas wie vorerwähnt Verunreinigungen enthalten, beispielsweise CO, $CO_2$, Kohlenwasserstoffe, Schwermetalle, Halogene, phosphorhaltige Verbindungen und/oder schwefelhaltigen Verbindungen. Bevorzugt beträgt der Anteil solcher Verunreinigungen weniger als 3 Vol.-%, insbesondere weniger als 1 Vol.-%. Als besonders vorteilhaft hat sich erwiesen, wenn der Anteil von schwefelhaltigen Verbindungen weniger als 100 ppm beträgt, insbesondere weniger als 10 ppm, insbesondere wenn das Ammoniak-haltige Gas frei von schwefelhaltigen Verbindungen ist.

Die Zusammensetzung des Ammoniak-haltigen Gases kann während der Durchführung des Verfahrens variiert werden, beispielsweise kann es von Vorteil sein, zunächst ein Ammoniakhaltiges Gas mit einem Stickstoffanteil von mehr als 3 Vol.-% einzusetzen und den Anteil des Stickstoffs anschließend zu reduzieren.

Im erfindungsgemäßen Verfahren wird ein Trägerkatalysator bereitgestellt. Das Verfahren wird also in Gegenwart eines Trägerkatalysators durchgeführt. Unter einem "Katalysator" wird ein für eine entsprechende Anwendung katalytisch aktives Material verstanden. Unter Trägerkatalysatoren versteht man im Allgemeinen Katalysatoren, die ein Trägermaterial enthalten, dessen Oberfläche mit einer katalytisch aktiven Komponente ausgestattet ist. Das Trägermaterial sollte dabei eine stabile Plattform für das katalytisch aktive Material bieten und unter den gewählten Reaktionsbedingungen stabil sein. Typischerweise weist das Trägermaterial selbst keine katalytische Aktivität auf.

Bei dem Trägerkatalysator handelt es sich um einen mit Ruthenium-ausgestatteten Trägerkörper. Mit anderen Worten wird der Trägerkatalysator in Form eines mit Ruthenium-ausgestatteten Katalysatorformkörpers bereitgestellt. Die Ausdrücke "mit Rutheniumausgestatteter Trägerkörper" und "Ruthenium-haltiger Trägerkatalysator" werden im Rahmen dieser Anmeldung synonym verwendet. Bei solchen Trägerkatalysatoren spricht man auch von Schüttgutkatalysatoren. Schüttgutkatalysatoren werden in Reaktoren für heterogen katalysierte Reaktionen als lose Schüttung bereitgestellt. Die Schüttung muss dabei so ausgeführt sein, dass einerseits eine große Oberfläche als Kontaktfläche zwischen dem festen Katalysator und den fluiden Reaktanden bereitgestellt wird, andererseits aber auch der Druckverlust über den Reaktor hinweg nicht zu groß wird. Schüttgutkatalysatoren haben gegenüber Katalysatoren in Pulverform den Vorteil, dass sie beispielsweise in Festbettreaktoren in kontinuierlichen Prozessen eingesetzt werden können.

Der Trägerkörper ist zylinderförmig. Die Geometrie des Trägerkörpers kann somit durch seine Länge entlang einer zentralen Achse und seinen Außendurchmesser beschrieben werden. Diese zentrale Achse wird im Rahmen dieser Anmeldung auch als Längsachse bezeichnet.

In bevorzugten Ausführungsformen hat der Trägerkörper eine Länge und/oder einen Außendurchmesser im Bereich von 0,5 bis 50 mm, bevorzugt von 1 bis 30 mm, insbesondere von 2 bis 20 mm. Es hat sich als vorteilhaft erwiesen, wenn das Verhältnis von Länge zu Außendurchmesser zwischen 1-1 bis 1-5 beträgt, insbesondere zwischen 1-1 bis 1-3.

Unter einem zylinderförmigen Trägerkörper werden im Rahmen dieser Anmeldung sowohl solche Trägerkörper verstanden, die eine ebene Umfangfläche aufweisen, als auch solche, die Einkerbungen oder Rillen aufweisen, die sich entlang der Umfangfläche erstrecken. Die Einkerbungen oder Rillen können in einem beliebigen Winkel relativ zur Richtung der Längsachse des Trägerkörpers angeordnet sein. So können die Einkerbungen oder Rillen beispielsweise helixartig entlang der Umfangsfläche des Trägerkörpers verlaufen. Bevorzugt verlaufen die Einkerbungen oder Rillen jedoch parallel zur Längsachse des Trägerkörpers.

Der Trägerkörper weist mindestens drei voneinander beabstandete Kanäle auf, die sich vollständig durch den Trägerkörper erstrecken. Mit anderen Worten erstrecken sich die Kanäle von einer Oberseite zu einer Unterseite des Trägerkörpers. Die Oberseite und Unterseite des Trägerkörpers werden auch als Stirnseiten bezeichnet. Unter Kanälen werden röhrenförmige Hohlräume verstanden, die insbesondere gasdurchlässig sind, also den Durchfluss von Gasen erlauben. Solche Kanäle haben sich als besonders vorteilhaft herausgestellt, da sie zum Einen dem Druckverlust in der Katalysatorschüttung entgegenwirken und zum Anderen die zur Verfügung stehende katalytisch wirksame Oberfläche vergrößern.

Der Trägerkörper kann beispielsweise 3, 4, 5, 6, 7, 8, 9, 10, 11, 12, 13, 14 oder 15 Kanäle aufweisen. Es hat sich als vorteilhaft erwiesen, wenn der Trägerkörper zwischen 3 und 10 Kanälen aufweist, insbesondere zwischen 5 und 8 Kanälen.

Einer der Kanäle erstreckt sich entlang der zentralen Längsachse des Trägerkörpers. Mit anderen Worten liegt die zentrale Längsachse in der Mitte besagten einen Kanals.

Bevorzugterweise erstrecken sich alle Kanäle parallel zu der zentralen Längsachse.

Bevorzugt sind die Kanäle, die sich nicht entlang der zentralen Längsachse des Trägerkörpers erstrecken, gleichmäßig beabstandet und symmetrisch um die zentrale Längsachse des Trägerkörper angeordnet, um die resultierende Festigkeit des Katalysators zu maximieren.

Die Form der Kanäle ist nicht weiter beschränkt, sie können beispielsweise einen runden, ovalen, tropfenförmigen oder polygonalen Querschnitt aufweisen.

Die Querschnittsfläche der Kanäle liegt bevorzugt in einem Bereich von 0,3 mm$^2$ bis 15 mm$^2$, insbesondere in einem Bereich von 1,0 mm$^2$ bis 10 mm$^2$. Die mindestens drei Kanäle können alle die gleiche Querschnittsfläche aufweisen. Es kann vorteilhaft sein, wenn der eine Kanal, der sich entlang der zentralen Längsachse des Trägerkörpers erstreckt, eine größere Querschnittsfläche als die mindestens zwei weiteren Kanäle aufweist.

Vorteilhafterweise beträgt der Anteil der Kanalquerschnittsflächen an der Gesamtquerschnittsfläche des Trägerkörpers mindestens 10 %, insbesondere mindestens 15 %, besonders vorteilhaft mindestens 20 %.

Für den Fall, dass die Kanäle eine runde Querschnittsfläche aufweisen, liegt der Durchmesser der Kanäle bevorzugt in einem Bereich von 0,1 mm bis 4 mm, bevorzugt im Bereich von 0,5 mm bis 3 mm, insbesondere im Bereich von 1,0 mm bis 2 mm. Die mindestens drei Kanäle können alle den gleichen Durchmesser aufweisen. Es kann vorteilhaft sein, wenn der eine Kanal, der sich entlang der zentralen Längsachse des Trägerkörpers erstreckt einen größeren Durchmesser als die mindestens zwei weiteren Kanäle aufweist.

Vorteilhafterweise beträgt der Volumen-Anteil der Kanäle am vom Trägerkörper umschlossenen Gesamtvolumen mindestens 20 %, insbesondere mindestens 25 %, besonders vorteilhaft mindestens 30 %. Ein hoher Volumenanteil der Kanäle hat einen vorteilhaften Einfluss auf die Volumenausdehnung der Reaktionsgase während der Ammoniakzersetzung. Außerdem wird der Anteil der geometrischen Oberfläche der Trägerkörper erhöht, was sich wiederum positiv auf die zur Verfügung stehende Katalysatoroberfläche auswirken kann.

Der Trägerkörper kann flache oder gewölbte Stirnseiten aufweisen. In vorteilhaften Ausführungsformen weist der Trägerkörper mindestens eine gewölbte Stirnseite auf, besonders vorteilhaft sind beide Stirnseiten gewölbt. Es hat sich gezeigt, dass solche gewölbten Stirnseiten die geometrische Oberfläche der Trägerkörper vergrößern und einen positiven Einfluss auf den Druckverlust im Reaktor zeigen.

Um eine möglichst lange Lebensdauer der Trägerkörper zu erreichen, müssen die Trägerkörper eine ausreichend hohe Festigkeit aufweisen. Dies kann zum einen durch die Geometrie des Trägerkörper und zum anderen durch die Festigkeit des Materials erreicht werden, aus dem der Trägerkörper hergestellt ist. Vorteilhafterweise weist der Trägerkörper eine Seitenbruchhärte von mehr als 30 N auf, bevorzugt mehr als 50 N. Die Seitenbruchhärte kann gemäß dem später beschriebenen Verfahren bestimmt werden.

Vorteilhafterweise weist der Trägerkörper eine Abriebfestigkeit von weniger als 30 % auf, bevorzugter weniger als 20 %. Die Abriebfestigkeit kann nach dem später beschriebenen Verfahren bestimmt werden.

Der Wärmausdehnungskoeffizient des Trägerkörpers beträgt vorteilhafterweise weniger als $10 \cdot 10^{-6}$ $K^{-1}$, insbesondere weniger als $8 \cdot 10^{-6}$ $K^{-1}$.

Der Trägerkatalysator ist Ruthenium-haltig, darunter ist zu verstehen, dass das Trägermaterial des Trägerkörpers mindestens mit Ruthenium ausgestattet ist. Das Ruthenium bildet also mindestens einen Teil der katalytisch aktiven Komponente des Trägerkatalysators.

Die verwendete Bezeichnung "Ruthenium" beinhaltet hierbei keine Aussage über die Oxidationsstufe des Rutheniums. Mit anderen Worten wird damit nicht das Vorliegen des elementaren Zustands mit der Oxidationsstufe 0 bezeichnet. Das Ruthenium kann auf und/oder an dem Trägermaterial elementar, also in der Oxidationsstufe (0) und/oder in einer höheren Oxidationsstufe vorliegen. Der hierin verwendete dem Fachmann bekannte Begriff "Oxidationsstufe" bedeutet die formale Ladung eines Atoms innerhalb einer Verbindung bzw. die tatsächliche Ladung einatomiger Ionen. Atome im elementaren Zustand weisen per Definition die Oxidationsstufe 0 auf.

Unter einer Ausstattung des Trägermaterials mit Ruthenium ist zu verstehen, dass Ruthenium auf dem Trägermaterial des Trägerkörpers geträgert ist, also dass das Ruthenium auf, in und/oder an dem Trägermaterial vorliegt, beispielsweise in Form von Partikeln und/oder einer Schicht. Die Begriffe "ausgestattet" und "geträgert" werden im Rahmen dieser Anmeldung synonym und austauschbar verwendet. Die Ausstattung des Trägermaterials kann dabei sowohl auf der Oberfläche als auch im Inneren des Trägermaterials vorliegen. Der Begriff "Oberfläche" umfasst hierbei sowohl die äußere als auch die innere Oberfläche, mit anderen Worten ist auch die innenliegende durch Poren gebildete Oberfläche umfasst.

Typischerweise ist der Trägerkörper mit 0,01 Gewichts-% (Gew.-%) bis 20 Gew.-% Ruthenium ausgestattet, bezogen auf die Gesamtmenge des Trägerkatalysators, vorzugsweise mit 0,1 Gew.-% bis 15 Gew.-%, bevorzugter mit 0,5 Gew.-% bis 10 Gew.-%, besonders bevorzugt mit 1,0 Gew.-% bis 5 Gew.-%.

Im Rahmen dieser Anmeldung gelten die Bereichsgrenzen als beinhaltet, wenn Bereiche genannt werden.

Bevorzugt enthält der Trägerkatalysator nicht mehr als 20 Gew.-% Ruthenium, besonders bevorzugt nicht mehr als 15 Gew.-%, insbesondere nicht mehr als 10 Gew.-%.

Beispielsweise enthält der Trägerkatalysator 20 Gew.-% Ruthenium, 15 Gew.-% Ruthenium, 12 Gew.-% Ruthenium, 10 Gew.-% Ruthenium, 9 Gew.-% Ruthenium, 8 Gew.-% Ruthenium, 7 Gew.-% Ruthenium, 6 Gew.-% Ruthenium, 5 Gew.-% Ruthenium, 4 Gew.-% Ruthenium, 3 Gew.-% Ruthenium, 2 Gew.-% Ruthenium, 1 Gew.-% Ruthenium, 0,5 Gew.-% Ruthenium, 0,1 Gew.-% Ruthenium, 0,05 Gew.-% Ruthenium, 0,01 Gew.-% Ruthenium oder Zwischenstufen davon.

Das Trägermaterial des Trägerkatalysators ist mindestens mit Ruthenium als katalytisch aktive Komponente ausgestattet. Das Trägermaterial kann aber auch mit weiteren Komponenten ausgestattet sein, beispielsweise mit mindestens einem weiteren Edelmetall oder mit Promotoren wie einem Übergangsmetall, einem Alkalimetall oder einem Erdalkalimetall.

Im Folgenden wird die katalytisch aktive Komponente des Trägerkatalysators als Edelmetall-Spezies bezeichnet, unabhängig davon, ob sie nur Ruthenium oder Ruthenium und mindestens ein weiteres Edelmetall umfasst. Die verwendeten Bezeichnungen "Edelmetall" oder "Edelmetall-Spezies" beinhalten hierbei keine Aussage über die Oxidationsstufe des Edelmetalls. Mit anderen Worten wird damit nicht zwangsweise das Vorliegen des elementaren Zustands mit der Oxidationsstufe 0 bezeichnet. Die Edelmetall-Spezies kann im und/oder am Trägerkatalysator elementar, also in der Oxidationsstufe (0) und/oder in einer höheren Oxidationsstufe vorliegen.

In einer Ausführungsform umfasst der Trägerkatalysator nur ein weiteres Edelmetall als katalytisch aktive Komponente. In weiteren Ausführungsformen umfasst der Trägerkatalysator zwei oder mehr weitere Edelmetalle.

Das mindestens eine weitere Edelmetall, mit dem der Trägerkatalysator ausgestattet ist, ist bevorzugt ausgewählt aus der 8. Gruppe, der 9. Gruppe, der 10. Gruppe oder der 11. Gruppe des Periodensystems. Besonders bevorzugt ist das mindestens eine weitere Edelmetall ausgewählt aus der Gruppe bestehend aus Rhodium (Rh), Palladium (Pd), Silber (Ag), Platin (Pt), Gold (Au), Iridium (Ir) und deren Kombinationen. Platin (Pt), Palladium (Pd), Rhodium (Rh) und Iridium (Ir) oder deren Kombinationen sind dabei besonders bevorzugt, noch bevorzugter sind Platin (Pt), Iridium (Ir) und deren Kombinationen.

Insbesondere hat es sich als vorteilhaft erwiesen, wenn das Trägermaterial mit einer Kombination aus Ruthenium und Platin, Ruthenium und Palladium, Ruthenium, Platin und Iridium, Ruthenium, Palladium und Iridium oder Ruthenium, Palladium und Platin ausgestattet ist. In besonders bevorzugten Ausführungsformen ist das Trägermaterial mit Ruthenium und Iridium oder Ruthenium, Platin und Iridium ausgestattet.

Wenn das Trägermaterial mit mindestens einem weiteren Edelmetall ausgestattet ist, liegen Ruthenium und das mindestens eine weitere Edelmetall bevorzugt in einem molaren Verhältnis im Bereich von 1:20 bis 20:1 vor, insbesondere in einem Verhältnis von 1:10 bis 10:1.

Der Trägerkatalysator kann die Edelmetall-Spezies im Bereich von 0,01 - 20 Gew.-% enthalten, bezogen auf das Gesamtgewicht des Trägerkatalysators. Darunter ist der Anteil aller enthaltenen Edelmetall-Spezies zu verstehen, also die Summe aller Gewichtsprozente von Ruthenium und den optional vorhandenen weiteren Edelmetallen. In bevorzugten Ausführungsformen beträgt der Gewichtsanteil der Edelmetall-Spezies 0,05 - 15 Gew.-%, besonders bevorzugt 0,1 - 12 Gew.-%, ganz besonders bevorzugt 0,1 - 10 Gew.-%.

Der Trägerkatalysator kann eine CO-Oberfläche im Bereich von 0,1 bis 200 $m^2$/g aufweisen. Die CO-Oberfläche ist ein Maß für die Oberfläche der Edelmetall-Spezies. Die CO-Oberfläche kann mittels der später beschriebenen Methode der CO-Adsorption ermittelt werden. Der Trägerkatalysator kann eine CO-Oberfläche im Bereich von 1 bis 150 $m^2$/g aufweisen, bevorzugter im Bereich von 5 bis 100 $m^2$/g. Es kann bevorzugt sein, dass die CO-Oberfläche des Trägerkatalysators mindestens 0,1 $m^2$/g beträgt, bevorzugter mindestens 1 $m^2$/g, noch bevorzugter mindestens 5 $m^2$/g.

Die Edelmetall-Spezies kann partikelförmig vorliegen, dabei können die Partikel auf und/oder im Trägermaterial vorliegen. Unter einem "Vorliegen im Trägermaterial" ist hierbei zu verstehen, dass die Edelmetall-Spezies in Poren des Trägermaterials vorliegen kann.

Grundsätzlich ist es vorteilhaft, wenn die Partikel der Edelmetall-Spezies so klein wie möglich sind, da die Partikel dann einen hohen Dispersionsgrad aufweisen. Dabei wird unter dem Dispersionsgrad das Verhältnis der Anzahl der Edelmetallatome, welche die Oberfläche der Edelmetall-Partikel bilden, zu der Gesamtzahl der Edelmetallatome der Edelmetall-Partikel verstanden. Gemäß einer bevorzugten Ausführungsform liegt die mittlere Partikelgröße der Edelmetall-Spezies im Bereich von 0,1 bis 15 nm, bevorzugter im Bereich von 1 bis 10 nm, insbesondere bevorzugt im Bereich von 2 bis 8 nm. Es kann bevorzugt sein, dass die Partikel der Edelmetall-Spezies eine mittlere Größe kleiner als 15 nm aufweisen, bevorzugter kleiner als 10 nm. Die mittlere Partikelgröße der Edelmetall-Spezies kann, wie später beschrieben, mittels Transmission-Elektronen-Mikroskopie (TEM) bestimmt werden.

Bevorzugt sind die Partikel der Edelmetall-Spezies gleichmäßig auf und/oder in dem Trägermaterial verteilt; d.h. der Abstand zwischen den Partikeln ist ähnlich. Bevorzugt beträgt der mittlere Abstand der Partikel der Edelmetall-Spezies auf dem Trägermaterial, bestimmt über TEM, mindestens 50 % der mittleren Partikelgröße, bevorzugter mindestens 75 %.

Der Trägerkatalysator kann auch mit einer weiteren Nicht-Edelmetall-Komponente ausgestattet sein, vorteilhafterweise mit einer Alkalimetall- oder Erdalkalimetall-Komponente, beispielsweise Natrium, Kalium, Rubidium, Cäsium, Magnesium, Calcium, Strontium, Barium oder deren Mischungen. Die verwendeten Bezeichnungen "Alkalimetall" oder "Erdalkalimetall" beinhalten hierbei keine Aussage über die Oxidationsstufe der Nicht-Edelmetall-Komponente. Mit anderen Worten wird damit nicht das Vorliegen des elementaren Zustands mit der Oxidationsstufe 0 bezeichnet. Die Nicht-Edelmetall-Komponente kann im und/oder am Trägerkatalysator elementar, also in der Oxidationsstufe (0) und/oder in einer höheren Oxidationsstufe vorliegen. Der Anteil dieser weiteren Nicht-Edelmetall-Komponente am Trägerkatalysator beträgt vorteilhafterweise 1 Gew.-% bis 25 Gew.-% bezogen auf das Gesamtgewicht des Trägerkatalysators, insbesondere 5 Gew.-% bis 20 Gew.-%, ganz besonders 10 Gew.-% bis 15 Gew.-%.

Wenn das Trägermaterial mit einer Nicht-Edelmetall-Komponente ausgestattet wird, liegen Ruthenium und die Nicht-Edelmetall-Komponente bevorzugt in einem molaren Verhältnis im Bereich von 1:1 bis 1:15 vor, insbesondere in einem Verhältnis von 1:1 bis 1:10, besonders bevorzugt in einem Verhältnis von 1:2 bis 1:5.

Besonders vorteilhaft wird der Trägerkatalysator mit mindestens einer Alkalimetall-Komponente oder Erdalkalimetall-Komponente ausgestattet, beispielsweise mit 1 Gew.-% bis 25 Gew.-%, bezogen auf das Gesamtgewicht des Trägerkatalysators, vorzugsweise mit 2 Gew.-% bis 20 Gew.-%, bevorzugter mit 3 Gew.-% bis 15 Gew.-%. Wenn das Trägermaterial mit einer Alkalimetall-Komponente oder Erdalkalimetall-Komponente ausgestattet wird, liegen Ruthenium und die Alkalimetall-Komponente oder Erdalkalimetall-Komponente bevorzugt in einem molaren Verhältnis im Bereich von 1:1 bis 1:15 vor, insbesondere in einem Verhältnis von 1:1 bis 1:10, besonders bevorzugt in einem Verhältnis von 1:2 bis 1:5. Die Ausstattung mit einer Alkalimetall-Komponente oder Erdalkalimetall-Komponente hat sich als besonders vorteilhaft für die Aktivität des Trägerkatalysators herausgestellt.

Insbesondere hat sich die Ausstattung mit Barium als besonders vorteilhaft für die Aktivität des Trägerkatalysators gezeigt. Vorteilhafterweise wird das Trägermaterial mit 1 Gew.-% bis 25 Gew.-% Barium ausgestattet, bezogen auf das Gesamtgewicht des Trägerkatalysators, vorzugsweise mit 2 Gew.-% bis 20 Gew.-%, bevorzugter mit 3 Gew.-% bis 15 Gew.-%. Es hat sich als besonders vorteilhaft erwiesen, wenn der Trägerkatalysator mit Barium ausgestattet wird und das molare Verhältnis von Ruthenium und Barium im Bereich von 1:1 bis 1:15 liegt, insbesondere in einem Verhältnis von 1:1 bis 1:10, besonders bevorzugt in einem Verhältnis von 1:2 bis 1:5.

Bevorzugt weist der Trägerkatalysator einen Halogengehalt unter 1000 Gew.-ppm auf, insbesondere weniger als 500 Gew.-ppm, besonders bevorzugt weniger als 100 Gew.-ppm. Ein niedriger Halogengehalt wirkt sich vorteilhaft auf die Korrosionsbeständigkeit des Trägerkatalysators selbst und auf das Reaktorsystem aus, in dem der Trägerkatalysator eingesetzt wird. Insbesondere beim Umsatz von Ammoniak-haltigen Gasen hat sich ein Katalysator mit einem minimalen Halogengehalt als vorteilhaft erwiesen, da es die Bildung vom Ammoniak- und/oder Ammonium-haltigen Halogenidsalzen vermieden wird, die wiederum schädlich für das Reaktorsystem sind.

Der Trägerkatalysator kann eine BET-Oberfläche im Bereich von 1 bis 1500 $m^2$/g aufweisen, bevorzugt im Bereich von 10 bis 1000 m$^2$/g, besonders bevorzugt im Bereich von 50 bis 500 m$^2$/g. Die BET-Oberfläche wird auch spezifische Oberfläche genannt und kann nach ISO 9277:2010 mit Stickstoff als Adsorbat bestimmt werden. In einer bevorzugten Ausführungsform verfügt der Trägerkatalysator über eine BET-Oberfläche von weniger als 1500 m$^2$/g, bevorzugt weniger als 1000 m$^2$/g, besonders bevorzugt weniger als 500 m$^2$/g.

Der Trägerkatalysator kann porös sein, d.h. dass der Trägerkatalysator Mikroporen und/oder Mesoporen und/oder Makroporen aufweisen kann. Im Rahmen der vorliegenden Erfindung werden unter Mikroporen Poren mit einer Porengröße im Bereich von weniger als 2 nm verstanden, unter Mesoporen Poren mit einer Porengröße im Bereich von 2 bis 50 nm und unter Makroporen Poren mit einer Porengröße im Bereich von 50 nm bis 5 μm. Unter der Porengröße wird hierbei die durchschnittliche Größe der Poren verstanden. Dementsprechend wird unter Porenvolumen die Summe der Volumina solcher Poren verstanden. Die Porengrößenverteilung und das Porenvolumen kann mittels Quecksilberporosimetrie gemäß ISO 15901-1:2016 bestimmt werden.

Es kann bevorzugt sein, dass der Trägerkatalysator eine hierarchische Porosität aufweist, d.h. dass der Trägerkatalysator über Poren in verschiedenen Größenbereichen verfügt. Bevorzugt verfügt der Trägerkatalysator über Makroporen und Mesoporen.

Bevorzugt weist der Trägerkatalysator Makroporen mit einem Durchmesser größer als 100 nm auf, bevorzugter größer als 300 nm, noch bevorzugter größer als 500 nm. Bevorzugt sind die Durchmesser der Makroporen des Trägerkatalysators homogen, d.h. mindestens 75 %, bevorzugter mindestens 85 % der Makroporen haben einen Durchmesser, der im Bereich von 40 % des Mittelwertes des Durchmessers liegt.

Bevorzugt weist der Trägerkatalysator Mesoporen mit einem Durchmesser größer als 5 nm auf, bevorzugter größer als 15 nm, noch bevorzugter größer als 25 nm. Bevorzugt sind die Durchmesser der Mesoporen des Trägerkatalysators homogen, d.h. mindestens 75 %, bevorzugter mindestens 85 % der Makroporen haben einen Durchmesser, der im Bereich von 40 % des Mittelwertes des Durchmessers liegt.

Das Gesamtporenvolumen liegt bevorzugt im Bereich von 0,3 cm$^3$/g bis 2,5 cm$^3$/g, insbesondere im Bereich von 0,5 cm$^3$/g bis 1,5 cm$^3$/g.

Der Trägerkörper der vorliegenden Erfindung umfasst als Trägermaterial ein refraktäres Oxid. Der hier verwendete Begriff "refraktäres Oxid" bezieht sich auf ein metallhaltiges Oxid, das bei hohen Temperaturen chemisch und physikalisch stabil ist, insbesondere bei den in Reaktoren vorherrschenden Betriebstemperaturen und Betriebsbedingungen. Refraktäre Oxide werden häufig auch als hitzebeständige Oxide bezeichnet.

Das refraktäre Oxid kann ein Oxid eines Übergangsmetalls oder eines Hauptgruppenmetalls sein, beispielsweise ein Oxid eines Metalls der Gruppe 3, ein Oxid eines Metalls der Gruppe 13, ein Oxid eines Metalls der Gruppe 4, ein Oxid eines Metalls der Gruppe 14, ein Oxid eines Metalls der Gruppe 5 oder eine Kombinationen aus zwei oder mehr der vorstehend genannten Metalloxide. Das refraktäre Oxid kann ausgewählt sein aus der Gruppe bestehend aus Titanoxiden (z.B. $TiO_2$), Zirkonoxiden (z.B. $ZrO_2$), Nioboxiden (z.B. $Nb_2O_5$), Tantaloxiden (z.B. $Ta_2O_5$), Ceroxiden (z.B. $CeO_2$), Aluminiumoxiden (z.B. α- oder γ-$Al_2O_3$), SiOz, BeO, MgO, CaO, SrO, BaO, ZnO, $Y_2O_3$, $La_2O_3$, $SnO_2$, CdO, PbO, $As_2O3$, $Bi_2O_3$, $Sb_2O_5$, $V_2O_5$, $Cr_2O_3$, $MoO_3$, $WO_3$ und einem Gemisch aus zwei oder mehr der vorstehend genannten Metalloxide.

Bevorzugt umfasst das refraktäre Oxid ein Aluminiumoxid, Magnesiumoxid, Siliziumoxid, Molybdänoxid, Wolframoxid, Titanoxid, Zirkonoxid, ein Mischoxid oder Verbundoxid von zwei oder mehr hiervon, besonders bevorzugt ein Aluminiumoxid oder ein Mischoxid oder Verbundoxid von Aluminiumoxid, vorzugsweise α- oder γ-$Al_2O_3$. Der Begriff "Mischoxid" wie hier verwendet bezeichnet einerseits ein Gemisch von Oxiden in einer einzelnen Phase, wie es auf dem einschlägigen Fachgebiet üblicherweise bekannt. Es werden somit "feste Lösungen" mit einem einheitlichen Kristallgitter bezeichnet, bei denen die einzelnen Metalloxide nicht mehr unterschieden werden können. Er wird vorliegend auch für physikalische Mischungen von Oxiden verwendet die Metalloxid-Agglomerate ohne einheitliches Kristallgitter aufweisen und bei denen Phasen der einzelnen Metalloxide unterschieden werden können. Der Begriff "Verbundoxid", wie er hier verwendet wird, bezeichnet allgemein eine Zusammensetzung von Oxiden mit mehr als einer Phase, wie es auf dem einschlägigen Fachgebiet üblicherweise bekannt ist.

Geeigneterweise umfasst der Trägerkatalysator das refraktäre Oxid zu mindestens 60 Gew.-%, bezogen auf das Gesamtgewicht des Trägerkatalysators, bevorzugter zu mindestens 70 Gew.-%, noch bevorzugter zu mindestens 80 Gew.-%, ganz besonders bevorzugt zu mindestens 85 Gew.-%, am bevorzugtesten zu mindestens 90 Gew.-%.

Das refraktäre Oxid kann dotiert sein, mit anderen Worten kann das refraktäre Oxid ein Dotierungsmittel umfassen. Trägermaterialien, die mit einem Dotierungsmittel dotiert sind, sind unter Verwendung von auf dem einschlägigen Fachgebiet bekannten Verfahren erhältlich. Eine Dotierung kann die Hitzebeständigkeit des Trägermaterials verbessern, die Aggregation der katalytisch aktiven Komponente unterdrücken und/oder die Aktivität und Stabilität des Trägerkatalysators erhöhen.

Geeignete Dotierungsmittel können ausgewählt sein aus der Gruppe bestehend aus Seltenerdmetallen, Übergangsmetallen, Alkalimetallen, Erdalkalimetallen und deren Mischungen. Insbesondere kann das Dotierungsmittel mindestens ein Element ausgewählt aus der Gruppe bestehend aus Natrium (Na), Kalium (K), Rubidium (Rb), Cäsium (Cs), Magnesium (Mg), Calcium (Ca), Cer (Ce), Zirkonium (Zr), Titan (Ti), Silicium (Si), Mangan (Mn), Yttrium (Y), Lanthan (La), Barium (Ba), Praseodym (Pr), Gadolinium (Gd), Samarium (Sm), Neodym (Nd), Scandium (Sc), Tantal (Ta), deren Oxiden und Mischungen aus zwei oder mehr der vorstehend genannten umfassen. Bevorzugt umfasst das Dotierungsmittel Barium, Calcium und/oder Kalium.

Besonders bevorzugt ist das dotierte refraktäre Oxid ein mit Barium, Bariumoxid, Calcium, Calciumoxid, Kalium und/oder Kaliumoxid dotiertes Aluminiumoxid, ein mit Barium, Bariumoxid, Calcium, Calciumoxid, Kalium und/oder Kaliumoxid dotiertes Mischoxid von Aluminiumoxid oder ein mit Barium, Bariumoxid, Calcium, Calciumoxid, Kalium und/oder Kaliumoxid dotiertes Verbundoxid von Aluminiumoxid.

In bevorzugten Ausführungsformen umfasst das refraktäre Oxid ein Alkalimetall und/oder ein Erdalkalimetall. Das Alkalimetall oder das Erdalkalimetall kann dabei als Komponente vorliegen, mit der das refraktäre Oxid ausgestattet ist und/oder als Dotierungsmittel des refraktären Oxids. Insbesondere umfasst das Trägermaterial Barium, Calcium und/oder Kalium.

Der Trägerkatalysator kann als refraktäres Oxid $Al_2O_3$, als katalytisch aktive Komponente mindestens Ruthenium und als weitere Komponente Platin (Pt), Palladium (Pd), Rhodium (Rh) Iridium (Ir), Magnesium (Mg), Calcium (Ca), Strontium (Sr) und/oder Barium (Ba) umfassen. Beispiele für bevorzugte Ausführungsformen des Trägerkatalysators sind $Ru/Al_2O_3$, $Ru+Pt/Al_2O_3$, $Ru+Pd/Al_2O_3$, $Ru+Rh/Al_2O_3$, $Ru+Ir/Al_2O_3$, $Ru+Mg/Al_2O_3$, $Ru+Ca/Al_2O_3$, $Ru+Sr/Al_2O_3$ oder $Ru+Ba/Al_2O_3$.

In einer besonders bevorzugten Ausführungsform umfasst der Trägerkatalysator als refraktäres Oxid ein Aluminiumoxid, insbesondere $\gamma$-$Al_2O_3$, und 0,01 - 20 Gew.-% Ruthenium. In diesen Fällen kann es bevorzugt sein, dass der Trägerkatalysator eine BET-Oberfläche im Bereich von 10 $m^2$/g bis 400 $m^2$/g aufweist, bevorzugt im Bereich von 20 $m^2$/g bis 300 $m^2$/g. In einer bevorzugten Ausführungsform verfügt der Trägerkatalysator bei Verwendung von Aluminiumoxid als Trägermaterial über eine BET-Oberfläche von weniger als 400 $m^2$/g, bevorzugt weniger als 300 $m^2$/g, besonders bevorzugt weniger als 200 $m^2$/g.

In einer weiteren besonders bevorzugten Ausführungsform umfasst der Trägerkatalysator als refraktäres Oxid ein Aluminiumoxid, insbesondere $\gamma$-$Al_2O_3$, 0,01 - 20 Gew.-% Ruthenium und 1,0 - 10,0 Gew.-% Barium. In diesen Fällen kann es bevorzugt sein, dass der Trägerkatalysator eine BET-Oberfläche im Bereich von 10 $m^2$/g bis 400 $m^2$/g aufweist, bevorzugt im Bereich von 20 $m^2$/g bis 300 $m^2$/g. In einer bevorzugten Ausführungsform verfügt der Trägerkatalysator bei Verwendung von Aluminiumoxid als Trägermaterial über eine BET-Oberfläche von weniger als 400 $m^2$/g, bevorzugt weniger als 300 $m^2$/g, besonders bevorzugt weniger als 200 $m^2$/g.

Verfahren zur Herstellung von mit Ruthenium-ausgestatteten Trägerkörpern sind dem Fachmann bekannt. Dabei wird typischerweise eine mindestens das refraktäre Oxid enthaltende Zusammensetzung bereitgestellt, die in die gewünschte Form gebracht wird, beispielsweise durch Extrudieren, Pressen, Granulieren oder Gießen. Die Zusammensetzung kann neben dem refraktären Oxid auch weitere Komponenten wie Lösungsmittel oder Bindemittel enthalten.

Das refraktäre Oxid wird in solchen Verfahren bevorzugt pulverförmig bereitgestellt. Geeignete Verfahren zur Herstellung von mit Ruthenium-ausgestatteten Trägerkörpern können weitere Schritte umfassen, beispielsweise das Erhitzen des in Form gebrachten pulverförmigen refraktären Oxids.

Falls das refraktäres Oxid bei der Formgebung bereits mit mindestens Ruthenium ausgestattet ist, wird so ein homogen mit Ruthenium ausgestatteter Trägerkörper erhalten. Unter einer homogenen Ausstattung wird hierbei verstanden, dass das Ruthenium weitgehend gleichmäßig in innenliegenden und außenliegenden Bereichen des Trägerkörpers vorliegt.

Falls das refraktäre Oxid bei der Formgebung nicht mit Ruthenium ausgestattet ist, wird zunächst ein Ruthenium-freier Trägerkörper erhalten, der in einem weiteren Schritt mit mindestens Ruthenium ausgestattet wird. Das Ruthenium ist bei einem solchen Herstellungsverfahren nicht homogen im Trägerkörper verteilt. Es hat sich als vorteilhaft erwiesen, wenn das Ruthenium nicht homogen verteilt im Trägerkörper vorliegt. Mit anderen Worten ist es vorteilhaft, wenn es sich bei dem Trägerkatalysator um einen Schalenkatalysator handelt, bei dem das Ruthenium hauptsächlich im Randbereich des Trägerkörpers vorliegt. Solche Schalenkatalysatoren ermöglichen einen möglichst effizienten Einsatz des verwendeten Edelmetalls.

Vorteilhafterweise beträgt die Dicke des Randbereichs weniger als 1000 $\mu$m, bevorzugt weniger als 700 $\mu$m, insbesondere weniger als 500 $\mu$m. Die Dicke des Randbereichs kann mittels SEM in Kombination mit EDX-Messung wie später beschrieben ermittelt werden. Unter dem Randbereich des Trägerkatalysators wird im Rahmen der vorliegenden Erfindung sowohl der Randbereich der Umfangfläche als auch Randbereiche innerhalb der Kanäle verstanden.

Bevorzugt liegen mindestens 60 Gew.-% des Rutheniums, bezogen auf die Gesamtmenge des Rutheniums, in den äußeren 40 Vol.-% des Trägerkatalysators vor, insbesondere mindestens 70 Gew.-%.

Die Ausstattung des Trägermaterials mit Ruthenium kann nach dem Fachmann bekannten Methoden erfolgen, beispielsweise durch Imprägnierung, Ausfällung, Gasphasenabscheidung (*engl. chemical vapor deposition, CVD*), Beschichtungsverfahren oder Sprühverfahren. Die Ausstattung kann in einem oder mehreren Schritten erfolgen.

Die Ausstattung umfasst dabei typischerweise das Zusammenbringen des Trägermaterials mit einer Ruthenium-Vorläuferverbindung, die meist in einer Zusammensetzung bereitgestellt wird, die mindestens ein Lösungsmittel umfasst. Im Anschluss an das Zusammenbringen kann die Ausfällung und/oder Reduzierung der Ruthenium-Vorläuferverbindung, sowie ein Trocknungs- und/oder Kalzinierungsschritt erfolgen. Bevorzugt wird der Trägerkatalysator durch die Imprägnierung des Trägermaterials mit der Zusammensetzung und einer anschließenden Reduktion erhalten. Optional kann vor oder nach der Reduktion eine thermische Behandlung erfolgen.

Die Ausstattung des Trägermaterials kann vor der Formgebung erfolgen oder wenn das Trägermaterial bereits als Formkörper vorliegt. Im ersten Fall kann beispielsweise ein zunächst pulverförmiges Trägermaterial ausgestattet werden und anschließend in Form gebracht werden, beispielsweise durch Extrusion oder Pressen. In solchen Fällen liegt das Ruthenium homogen verteilt im Formkörper vor.

Dem Fachmann sind verschiedene Imprägnierverfahren bekannt, beispielsweise kapillarkontrolliertes Imprägnieren (so genannte *"incipient wetness"* Methoden) und diffusionskontrolliertes Imprägnieren (so genannte adsorptionskontrollierte Methoden). Zur Herstellung von geeigneten Trägerkatalysatoren für die vorliegende Erfindung sind prinzipiell beide Herangehensweisen geeignet. Unter Imprägnierung wird im Allgemeinen das Zusammenbringen eines Trägermaterials mit einer Verbindung und die daraus resultierende Adsorption der Verbindung auf der Oberfläche des Trägermaterials verstanden. Im Fall eines porösen Trägermaterials handelt es sich dabei insbesondere auch um eine innere, d.h. innerhalb der Poren liegende, Oberfläche.

Das Zusammenbringen erfolgt beispielsweise dadurch, dass die Zusammensetzung zu einer Suspension des Trägermaterials in einem Lösungsmittel gegeben wird und diese Mischung gemischt wird. Es ist jedoch auch möglich, eine solche Zusammensetzung auf das Trägermaterial aufzusprühen oder das Trägermaterial zu einer solchen Zusammensetzung zu geben und diese Mischung dann zu durchmischen. Verfahren zum Durchmischen solcher Systeme wie beispielsweise Rühren sind dem Fachmann bekannt, dabei können Zwangsmischer, Freifallmischer, Rührer, Strömungsmischer oder Mischpumpen zum Einsatz kommen.

Der Trägerkatalysator kann beispielsweise hergestellt werden durch ein Verfahren umfassend

I) Imprägnieren des Trägermaterials mit einer Zusammensetzung, enthaltend eine Ruthenium-Vorläuferverbindung und ein Lösungsmittel;
II) einen Reduktionsschritt.

Als Ergebnis des Imprägnierschritts I) wird ein imprägniertes (d.h. mit der Ruthenium-Vorläuferverbindung beladenes) Trägermaterial erhalten. Bevorzugt wird eine homogene bzw. gleichmäßige Ausrüstung des Trägermaterials mit dieser Ruthenium-Vorläuferverbindung erreicht.

Ein "Lösungsmittel" bedeutet hierin, dass das Lösungsmittel mindestens eine flüssige Substanz umfasst, in welcher die Ruthenium-Vorläuferverbindung löslich ist. Das mindestens eine Lösungsmittel kann mehrere chemische Substanzen enthalten, d. h. das Lösungsmittel kann auch ein Lösungsmittelgemisch sein.

Das mindestens eine Lösungsmittel kann ausgewählt sein aus der Gruppe bestehend aus Wasser und organischen Lösungsmitteln. Das organische Lösungsmittel kann aus einer Vielzahl üblicher organischer Lösemittel ausgewählt sein. Zweckmäßigerweise ist das organische Lösungsmittel unter den Verarbeitungsbedingungen der Zusammensetzung im Wesentlichen flüchtig. Organische Lösungsmittel können beispielsweise Alkohole, wie Methanol oder Ethanol, sein. Bevorzugt besteht das Lösungsmittel zu mindestens 60 Vol-% aus Wasser, bevorzugter zu mindestens 70 Vol.-%, insbesondere zu mindestens 80 Vol.-%. Es kann vorteilhaft sein, dass das Lösungsmittel vollständig aus Wasser besteht.

In einer bevorzugten Ausführungsform umfasst die Zusammensetzung das Lösungsmittel zu 20 bis 99,5 Gew.-%, bezogen auf das Gesamtgewicht der Zusammensetzung, bevorzugt zu 30 bis 95 Gew.-%. Vorteilhafterweise umfasst die Zusammensetzung das Lösungsmittel zu mindestens 50 Gew.-%, besonders bevorzugt zu mindestens 80 Gew.-%, ganz besonders bevorzugt zu mindestens 90 Gew.-%.

Die Menge des Rutheniums in der Zusammensetzung kann über weite Bereiche variieren und wird bestimmt durch die beabsichtige Beladung des Trägermaterials mit Ruthenium. Die "Menge des Rutheniums" bezieht sich auf den Rutheniumanteil in der Zusammensetzung, mit anderen Worten wird damit nicht die Menge der gesamten Ruthenium-Vorläuferverbindung bezeichnet. Bevorzugt umfasst die Zusammensetzung 0,5 bis 75 Gew.-% Ruthenium, bezogen auf das Gesamtgewicht der Zusammensetzung umfassend das mindestens eine Lösungsmittel und die Rutheniumverbindung. In einer Ausführungsform umfasst die Zusammensetzung 1 bis 60 Gew.-% Ruthenium, bevorzugt 5 bis 50 Gew.-%. Besonders gute Ergebnisse werden erhalten, wenn die Zusammensetzung Ruthenium in einer Menge von mindestens 0,5 Gew.-% enthält, insbesondere mindestens 1 Gew.-%, vorzugsweise mindestens 5 Gew.-%, bevorzugt mindestens 10 Gew.-%.

Unter Ruthenium-Vorläuferverbindungen werden solche Verbindungen des Rutheniums verstanden, die über thermische Zersetzung oder durch nasschemische Reduktion in den elementaren Zustand überführbar sind. Geeignete Verbindungen sind beispielsweise Salze, Komplexverbindungen oder Organometallverbindungen des Rutheniums. Beispiele für geeignete Rutheniumverbindungen umfassen Rutheniumnitrat, Rutheniumacetat, Rutheniumpentacarbonyl, Rutheniumacetylacetonat, Rutheniumoxalat, Rutheniumnitrosyloxalat, Ruthenocen und Rutheniumnitrosylnitrat.

Die Zusammensetzung kann nur eine Ruthenium-Vorläuferverbindung oder mehrere Ruthenium-Vorläuferverbindungen enthalten.

Bevorzugt handelt es sich bei der Ruthenium-Vorläuferverbindung um eine halogenfreie Rutheniumverbindung, insbesondere um eine chloridfreie Rutheniumverbindung. Unter halogenfreien, insbesondere chloridfreien, Rutheniumverbindungen werden hierbei solche Rutheniumverbindungen verstanden, die bis auf unvermeidbare Verunreinigungen, beispielsweise durch den Herstellprozess bedingte Rückstände, keine Halogen- bzw. Chlorid-Komponente umfassen. Die Herstellung von Trägerkatalysatoren unter Verwendung von Halogen- bzw. Chlorid-haltigen Vorläuferverbindungen erfordert ein Waschen des hergestellten Materials, was die Herstellung teuer und aufwendig macht.

Es hat sich als vorteilhaft erwiesen, wenn der im erfindungsgemäßen Verfahren eingesetzte Trägerkatalysator unter Verwendung einer Oxalat-enthaltenden Ruthenium-Vorläuferverbindung hergestellt worden ist, oder anders ausgedrückt, dass die auf dem Trägermaterial geträgerte katalytisch aktive Ruthenium-Komponente zumindest anteilig aus einer solchen Vorläuferverbindung hergestellt worden ist. Es wurde gefunden, dass solche Trägerkatalysatoren eine hohe Langzeitstabilität aufweisen und gleichzeitig eine kurze Einfahrphase bis zum Erreichen der vollständigen Aktivität benötigen. Zudem sind sie in der Herstellung besonders vorteilhaft, da aufwendige Waschschritte entfallen können und keine schädlichen Zersetzungsprodukte entstehen.

Bevorzugt ist das Ruthenium in der Oxalat-enthaltenden Ruthenium-Vorläuferverbindung über thermische Zersetzung oder durch nasschemische Reduktion in den elementaren Zustand überführbar. Insbesondere ist das Ruthenium in der Oxalat-enthaltenden Ruthenium-Vorläuferverbindung über thermische Zersetzung unter inerten oder reduzierenden Bedingungen in den elementaren Zustand überführbar, mit anderen Worten können unter nichtreduzierenden oder nicht-inerten Bedingungen auch andere Oxidationsstufen erhalten werden. Es ist vorteilhaft, dass sich solche Ruthenium-Vorläuferverbindung neben der Bildung der katalytisch aktiven Ruthenium-Komponente praktisch rückstandsfrei zersetzen lassen. Gegenüber beispielsweise Carbonylkomplexen des Rutheniums haben sie zudem den Vorteil, dass sie weniger flüchtig sind und selbst sowie die entsprechenden Zersetzungsprodukte weniger giftig oder sogar ungiftig sind.

Die Oxalat-enthaltende Ruthenium-Vorläuferverbindung ist vorteilhafterweise bei einer Temperatur unterhalb von 500 °C zersetzbar, insbesondere unterhalb von 400 °C, besonders bevorzugt unterhalb von 300 °C.

Unter Oxalat-enthaltenden Ruthenium-Vorläuferverbindungen sind Verbindungen zu verstehen, die Ruthenium in einer beliebigen Oxidationsstufe und mindestens eine Oxalat-Einheit umfassen. Das Ruthenium kann dabei in einer einzigen oder unterschiedlichen Oxidationsstufen in der Verbindung vorliegen. Der Begriff "Oxalat-Einheit" bezeichnet ein als nicht-komplexierendes oder als Ligand fungierendes, d.h. komplexierendes, $C_2O_4^{2-}$-Dianion. Die Ruthenium-Vor-läuferverbindung kann über ein oder mehrere Ruthenium-Zentren verfügen.

Bei der Oxalat-enthaltende Ruthenium-Vorläuferverbindung kann es sich um Ruthenium-haltige Salze oder Ruthenium-Komplexverbindungen handeln, die neben mindestens einem Oxalat-Liganden (Ox) auch mindestens einen oder mehrere weitere Liganden enthält, beispielsweise Hydroxy-Liganden (OH), Carbonat-Liganden ($CO_3$), Nitrosyl-Liganden (NO), Ammoniak-Liganden ($NH_3$) oder Hydratliganden ($H_2O$) sowie weitere Liganden, die sich rückstandsfrei zersetzen.

Beispiele für geeignete Ruthenium-Vorläuferverbindungen umfassen Ruthenium-Oxalate, Ruthenium-Nitrosyl-Oxalate, Ruthenium-Carbonat-Oxalate sowie deren jeweilige Ammoniumsalze, Hydrate und Säuren.

Die Herstellung von Oxalat-enthaltenden Ruthenium-Vorläuferverbindung und ihren Lösungen wird beispielsweise in der DE 102007014914 A1 und in der DE 1533088 A1 beschrieben. In geeigneten Herstellungsverfahren können isolierte Ruthenium-Vorläuferverbindung eingesetzt werden, ebenso können direkt ihre Lösungen eingesetzt werden.

In einer bevorzugten Ausführungsform liegt das Trägermaterial während des Imprägnierschritts suspendiert in der Zusammensetzung vor. Eine Suspension im Sinne der vorliegenden Erfindung ist eine Mischung aus einem Feststoff und einer Flüssigkeit, wobei der Feststoff gleichmäßig verteilt in Form von fein verteilten Festkörpern in der Flüssigkeit vorliegt.

In einer alternativen Ausführungsform liegen Trägermaterial und die Zusammensetzung während des Imprägnierschritts in Form eines getränkten Pulvers vor. Darunter ist zu verstehen, dass die Lösung nur in einem solchen Ausmaß zugegeben wird, dass das Trägermaterial benetzt wird.

In einer weiteren Ausführungsform liegt das Trägermaterial bereits in Form des Trägerkörpers vor und die Zusammensetzung wird in einem solchem Ausmaß zugegeben, dass die Poren des Trägerkörpers vollständig gefüllt sind.

Der Imprägnierschritt kann bei Raumtemperatur durchgeführt werden. Der Imprägnierschritt kann jedoch ebenso bei einer gegenüber Raumtemperatur verringerten oder erhöhten Temperatur durchgeführt werden. Während des Imprägnierschritts kann die Temperatur der Mischung, enthaltend Trägermaterial und die Zusammensetzung, beispielsweise 10 °C bis 90 °C betragen, bevorzugter 20 °C bis 80 °C. Die Dauer des Imprägnierschritts wird so gewählt, dass sich die Ruthenium-Vorläuferverbindung in ausreichender Menge auf dem Trägermaterial abscheiden kann. Eine geeignete Zeitdauer kann der Fachmann anhand von Routineversuchen ermitteln.

Bevorzugt scheidet sich die Ruthenium-Vorläuferverbindung vollständig aus der Lösung auf dem Trägermaterial ab. Nach dem Imprägnierschritt ist das Lösungsmittel dementsprechend frei von der Ruthenium-Vorläuferverbindung.

Für den Fall, dass das Trägermaterial mit mehreren Komponenten ausgestattet werden soll, kann es bevorzugt sein die betreffenden Verbindungen gemeinsam in einer Zusammensetzung bereitzustellen. Es kann aber auch bevorzugt sein, die betreffenden Verbindungen in separaten Zusammensetzungen bereitzustellen. Beide Varianten eignen sich, um das Trägermaterial gleichzeitig mit beispielsweise Ruthenium und Iridium oder mit Ruthenium und Barium auszustatten.

In weiteren Ausführungsformen kann es vorteilhaft sein, das Trägermaterial sequentiell mit den unterschiedlichen Komponenten auszustatten, also zunächst mit Ruthenium und im Anschluss mit der weiteren Komponente oder umgekehrt, wobei der Reduktionsschritt am Ende für beide Spezies gemeinsam oder als Zwischenschritt ausgeführt werden kann.

Beispielsweise kann ein Aluminiumoxid zunächst mit Ruthenium und im Anschluss mit Barium ausgestattet werden. Das Barium wird dabei bevorzugt in einer Zusammensetzung, die Barium-Acetat umfasst, auf das Aluminiumoxid aufgebracht.

Es kann aber ebenso vorteilhaft sein, ein Aluminiumoxid zunächst mit Barium und im Anschluss mit Ruthenium auszustatten. Das Barium kann auch in dieser Reihenfolge bevorzugt in einer Zusammensetzung, die Barium-Acetat umfasst, auf das Aluminiumoxid aufgebracht werden.

Die eingesetzte Menge des Trägermaterials während der Herstellung hängt von der gewünschten Menge des Rutheniums ab, die auf dem Trägermaterial abgeschieden werden soll und damit auch von der Konzentration des Rutheniums in der eingesetzten Zusammensetzung der Ruthenium-Vorläuferverbindung.

Das Trägermaterial liegt während des Imprägnierschritts beispielsweise in einem Bereich von 5 Gew.-% bis 95 Gew.-% vor, bezogen auf die Gesamtmenge von Zusammensetzung und Trägermaterial, bevorzugter in einem Bereich von 10 Gew.-% bis 90 Gew.-%.

Die Zusammensetzung kann auch weitere Komponenten, wie beispielweise Säuren, enthalten.

Optional kann das Verfahren nach Schritt I) und vor Schritt II) auch ein Trocknen oder eine thermische Behandlung des imprägnierten Trägermaterials umfassen.

Bevorzugt werden mindestens 90 % des Lösungsmittels vor dem Reduktionsschritt entfernt, der imprägnierte Trägermaterial kann auch vollständig bis zur Gewichtskonstanz getrocknet werden.

Dem Fachmann ist eine solche thermische Behandlung auch als Kalzinieren bekannt. Unter "Kalzinierung" versteht der Fachmann eine thermische Behandlung, bei dem bevorzugt die Fixierung einer metallischen Komponente auf einem Trägermaterial erfolgt.

In einer bevorzugten Ausführungsform führt die thermische Behandlung des imprägnierten Trägermaterials zur Zersetzung der Ruthenium-Vorläuferverbindung. Die thermische Behandlung wird bevorzugt unter Anwesenheit von Sauerstoff durchgeführt. Die thermische Behandlung kann bei einer Temperatur von weniger als 1000 °C, 900 °C, 800 °C, 700 °C, 600 °C, 500 °C, 400 °C oder weniger als 300 °C stattfinden. In einer Ausführungsform wird das imprägnierte Trägermaterial bei einer Temperatur von 350 °C bis 500 °C thermisch behandelt. Bevorzugt erfolgt die thermische Behandlung für einen Zeitraum von 0,5 h bis 24 h, bevorzugt für einen Zeitraum von 2 h bis 18 h.

Das Kalzinieren kann sowohl unter Atmosphärenbedingungen als auch unter Intertgasbedingungen erfolgen.

Das Trocknen und das Kalzinieren können auch in einem gemeinsamen Schritt erfolgen.

In Schritt II) des Verfahrens zur Herstellung des Trägerkatalysators erfolgt eine Reduktion. Darunter ist zu verstehen, dass die nach der Imprägnierung auf dem Trägermaterial vorliegende Ruthenium-Vorläuferverbindung zumindest teilweise in eine niedrigere Oxidationsstufe überführt wird.

Dem Fachmann sind Methoden zur Reduktion und geeignete Reduktionsmittel prinzipiell bekannt. Der Reduktionsschritt kann beispielsweise unter reduzierender Atmosphäre oder nasschemisch erfolgen. Insbesondere kann der Reduktionsschritt unter Formiergasatmosphäre, mit reduzierenden Säuren, deren Salzen oder reduzierenden Borverbindungen durchgeführt werden. Unter Formiergas versteht der Fachmann eine Gasmischung, die Stickstoff und Wasserstoff enthält, beispielsweise 95 Vol.-% Stickstoff und 5 Vol.-% Wasserstoff. Im Fall einer nasschemischen Reduktion wird als Reduktionsmittel bevorzugt Ameisensäure oder ein Salz der Ameisensäure, beispielsweise Natriumformiat, eingesetzt.

Im Fall der nasschemischen Reduktion kann der Reduktionsschritt direkt in der Imprägnierlösung durchgeführt werden, d.h. das imprägnierte Trägermaterial, das nach Schritt I) erhalten wurde, wird nicht vom Lösungsmittel abgetrennt. In anderen Worten kann es bevorzugt sein, das Reduktionsmittel direkt nach Schritt I) zuzugeben.

Der Reduktionsschritt erfolgt beispielsweise bei einer Temperatur unterhalb von 700 °C, bevorzugter unterhalb von 600 °C, besonders bevorzugt unterhalb von 400 °C. Im Fall der nasschemischen Reduktion kann es bevorzugt sein, die Reduktion bei einer Temperatur von unter 100 °C durchzuführen. Bevorzugt erfolgt der Reduktionsschritt für einen Zeitraum von 0,5 h bis 24 h, bevorzugt für einen Zeitraum von 2 h bis 15 h.

Es kann bevorzugt sein, das in Schritt II) erhaltene Material einem weiteren Verfahrensschritt zu unterziehen.

In einer bevorzugten Ausführungsform wird das in Schritt II) erhaltene Material abfiltriert und getrocknet. Das Trocknen erfolgt beispielsweise bei einer Temperatur unterhalb von 250 °C, bevorzugter unterhalb von 200 °C, noch bevorzugter unterhalb von 150 °C. Insbesondere kann das Trocknen unter vermindertem Druck erfolgen, bevorzugt bei einem Druck von unter 300 mbar. Bevorzugt erfolgt das Trocknen unter Ausschluss von Sauerstoff. Bevorzugt erfolgt die Trocknung für einen Zeitraum von 0,5 h bis 30 h, bevorzugt für einen Zeitraum von 2 h bis 24 h.

Nach der Ausstattung eines pulverförmigen Trägermaterials wird dieses noch einem weiteren Verfahrensschritt unterzogen, um einen mit Ruthenium-ausgestatteten Trägerkörper zu erhalten, beispielsweise einem Pressen oder Extrudieren. Dem Fachmann sind solche Verfahren zur Formgebung von pulverförmigen Trägermaterialen bekannt.

Das erfindungsgemäße Verfahren umfasst das Kontaktieren des Trägerkatalysators mit dem Ammoniak-haltigen Gas.

Die Kontaktierung erfolgt bevorzugt bei einem Druck im Bereich von 1 bis 300 bar, bevorzugter im Bereich von 10 bis 200 bar.

Vorteilhafterweise liegt die stündliche volumenbasierte Raumgeschwindigkeit (*engl. "gas hourly space velocity"*, GHSV) im Bereich von 1.000 bis 100.000 h$^{-1}$, insbesondere im Bereich von 1.500 bis 50.000 h$^{-1}$, besonders bevorzugt im Bereich von 2.000 bis 10.000 h$^{-1}$. Es kann vorteilhaft sein, die Verweilzeit des Ammoniak-haltigen Gases im Katalysatorbett durch Verringerung des $NH_3$-Durchsatzes zu erhöhen.

Da es sich bei der Reaktion um eine endotherme Reaktion handelt, kann es vorteilhaft sein, die Reaktion bei erhöhter Temperatur durchzuführen. Bevorzugt beträgt die Temperatur zwischen 300 °C und 800 °C, insbesondere zwischen 400 °C und 700 °C. Insbesondere kann es vorteilhaft sein, den Trägerkatalysator oder das Trägerkatalysatorbett auf diese Temperatur zu heizen.

Der eingesetzte Trägerkatalysator ermöglicht es, das Verfahren auch bei niedrigeren Temperaturen durchzuführen, vorteilhafterweise bei unter 600 °C, insbesondere bei unter 500 °C, ganz besonders vorteilhaft bei unter 400 °C.

Das Ammoniak-haltige Gas kann vor dem Kontaktierungsschritt vorgeheizt werden. In bevorzugten Ausführungsformen wird das Ammoniak-haltige Gas auf mindestens 200 °C vorgeheizt, bevorzugter auf mindestens 400 °C.

Das erfindungsgemäße Verfahren wird bevorzugt in einem Reaktor durchgeführt, der zumindest anteilig aus einem korrosionsbeständigen Material, beispielsweise rostfreiem Stahl, besteht.

Der Reaktor kann ein geschlossenes Kreislaufreaktionssystem, ein Durchflussreaktionssystem oder ein Reaktionssystem mit diskontinuierlicher Reaktionsführung sein, wobei das Durchflussreaktionssystem aus praktischer Sicht am meisten bevorzugt wird.

Die Erfindung betrifft außerdem die Verwendung eines Ruthenium-haltigen Trägerkatalysators in einem Verfahren zur Herstellung von Wasserstoff aus einem Ammoniak-haltigen Gas durch Kontaktieren des Trägerkatalysators mit dem Ammoniak-haltigen Gas, wobei der Trägerkatalysator in Form eines mit Ruthenium-ausgestatteten Trägerkörpers bereitgestellt wird, wobei der Trägerkörper

- als Trägermaterial ein refraktäres Oxid umfasst,
- zylinderförmig ist und
- mindestens drei voneinander beabstandete Kanäle aufweist, die sich vollständig durch den Katalysatorträger erstrecken, wobei einer der Kanäle sich entlang der zentralen Längsachse erstreckt.

Alle für das Verfahren zur Herstellung von Wasserstoff aus einem Ammoniak-haltigen Gas gemachten Ausführungen gelten ebenso für die Verwendung des Ruthenium-haltigen Trägerkatalysators für diese Anwendung.

Nachfolgend wird die Erfindung anhand von Abbildungen näher erläutert. Sie ist jedoch nicht auf diese Ausführungsformen beschränkt.

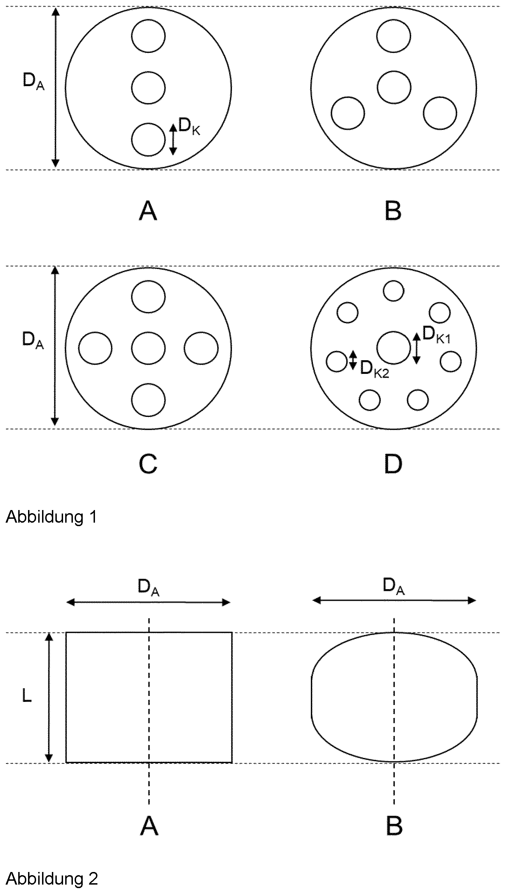

Abbildung 1 zeigt Querschnitte von Trägerkörpern mit einer unterschiedlichen Anzahl von Kanälen, die besonders für das erfindungsgemäße Verfahren geeignet sind. Die Trägerkörper weisen einen Außendurchmesser $D_A$ auf; die Kanäle sind durch ihre Innendurchmesser $D_K$ charakterisiert. Der Trägerkörper in Abb. 1 A weist drei Kanäle auf, der in Abb. 1 B vier und der in Abb. 1 C fünf Kanäle, die jeweils den gleichen Innendurchmesser haben. Der Trägerkörper in Abb. 1 D weist acht Kanäle auf, wobei der Innendurchmesser $D_{K1}$ des zentralen Kanals größer ist als Innendurchmesser $D_{K2}$ der sieben nicht-zentralen Kanäle.

Abbildung 2 zeigt Seitenansichten von Trägerkörpern mit einer Länge L und einem Außendurchmesser $D_A$, die gestrichelte Linie zeigt jeweils die Lage der zentralen Längsachse an. Der Trägerkörper in Abb. 2 A weist grade Stirnseiten auf. Der Trägerkörper in Abb. 2 B verfügt über gewölbte Stirnseiten.

Nachfolgend sind die in der vorliegenden Erfindung verwendeten Messmethoden angegeben. Falls keine Testmethode angegeben ist, wurde die entsprechende ISO-Methode zur Bestimmung des betreffenden Parameters verwendet, in der gültigen Fassung zum Anmelde-Zeitpunkt der vorliegenden Anmeldung. Falls keine spezifischen Messbedingungen angegeben sind, erfolgte die Messung bei Raumtemperatur (298.15 K) und Normaldruck (100 kPa).

**Messmethoden**

Spezifische BET-Oberfläche

Die spezifische BET-Oberfläche wurde mit Stickstoff als Adsorbat bei 77 K gemäß der BET-Theorie bestimmt (Mehrpunkt-Methode, ISO 9277:2010).

CO-Adsorption

Die Edelmetall-Oberfläche der Katalysatoren wurde über CO-Adsorption bestimmt. Hierfür wurde ein Katalysator zunächst für 20 min bei 400 °C unter Formiergas, bestehend aus 95 % Argon und 5 % Wasserstoff, in einem geschlossenen Behältnis reduziert. Anschließend erfolgte ein pulsweises Dosieren von Kohlenstoffmonoxid (CO, mit Helium als Trägergas) in das Behältnis, in welchem sich der Katalysator befand. Dies erfolgte so lange, bis hinter dem Katalysator konstante CO-Peaks detektiert wurden. Durch Bestimmung der Peak-Fläche des dosierten CO und durch Bestimmen der Peak-Fläche des umgesetzten CO wurde die durch den Katalysator aufgenommene Menge an CO bestimmt. Hierfür wurde das Integral der Fläche des umgesetzten CO vom Integral der Fläche an dosiertem CO subtrahiert. Aus der so erhaltenen Menge an aufgenommenem CO wurde berechnet, wie viel CO je eingesetzter Menge an katalytisch aktiver Zusammensetzung, gespeichert wurde. Über Umrechnungen konnte aus der gemessenen, an den aktiven Zentren gespeicherten CO-Menge, die Oberfläche der aktiven Edelmetallzentren (oft auch als CO-Oberfläche oder Edelmetalloberfläche bezeichnet) bestimmt werden.

Porenvolumen und Porendurchmesserverteilung

Die Bestimmung des Porenvolumens und der Porendurchmesserverteilung erfolgten mittels Quecksilberporosimetrie gemäß ISO 15901-1:2016.

Bestimmung des Edelmetallgehalts via ICP-OES

Der Edelmetallgehalt wurde mithilfe von optischer Emissionsspektroskopie mit induktiv gekoppeltem Plasma (*engl. Inductively coupled plasma - optical emission spectrometry, ICP*-OES) bestimmt. Zunächst wurden 500 mg der Probe in 25 mL HF+HCl aufgeschlossen. Anschließend wurde die Lösung mit Wasser auf 250 mL aufgefüllt.

SEM-EDX-Charakterisierung

Die Verteilung des Rutheniums im Trägerkörper wurde mittels SEM-Aufnahmen (Rasterelektronenmikroskopie, engl. *scanning electron microscopy*) mit gekoppelter EDX-Spektroskopie (energiedispersive Röntgenspektroskopie, engl. *energy dispersive X-ray spectroscopy)* charakterisiert. Zur Probenvorbereitung wurden beschichtete Trägerkörper in Harz eingebettet, geteilt und poliert. Die Analysen wurden mit einem mit einem integrierten energiedispersiven Röntgenanalysesystem ausgestatten Jeol JSM-IT100 Rasterelektronenmikroskop unter Verwendung eines 20-keV-Elektronenstrahls durchgeführt.

Druckverlust

Der Druckverlust verschiedener Katalysatorschüttungen wurde mit einem PTB-100 (Bastra Engineering) bestimmt. Das System wurde dazu zunächst im Leerzustand kalibriert. Ein rohrförmiger Probenhalter (Durchmesser 150 mm) wurde anschließend mit den Katalysatorformkörpern bestückt (Füllhöhe 50 mm). Mit einem Drucksensor wurde die Druckdifferenz bei nach und nach erhöhter Strömungsgeschwindigkeit bestimmt. Die Auswertung erfolgte mit der geräteeigenen Software.

Seitenbruchhärte der Katalysator-Trägerkörper

Zur Bestimmung der Seitenbruchhärte wurden Trägerkörper zwischen zwei parallelen Platten mit zunehmender Kraft belastet, bis Bruch eintrat. Die beim Bruch registrierte Kraft entspricht der Seitenbruchhärte.
Die Probenvorbereitung erfolgte durch ein Trocknen über Nacht bei 150 °C unter Vakuum und abschließendem Abkühlen. Die Bestimmung erfolgte mit einem Tablettenhärte-Prüfgerät (Typ ERWEKA TBH 325). Die Bestimmung erfolgte unter konstantem Kraftanstieg mit 20 N/s.

Abriebfestigkeit

Die Abriebfestigkeit wurde durch mechanische Belastung in einem sich drehenden Stahlzylinder unter Anwesenheit von zusätzlichen Stahlkugeln bestimmt. Die Probenvorbereitung erfolgte durch ein Vorsieben des Materials, einem anschließenden Trocknen über Nacht bei 120 °C unter Stickstoff-Atmosphäre und abschließendem Abkühlen. Das entsprechend vorbereitete Material wurde in einem Stahlzylinder eingewogen, der im Anschluss für 30 min mit 80 Umdrehungen/Minute um die eigene Achse rotiert wurde. Der entstehende Abrieb wurde abgesiebt und ausgewogen (A). Der Abrieb wird als prozentualer Anteil im Verhältnis zum ursprünglichen Gewicht ($M_0$) des Materials angegeben:

$$Abrieb\ [\%] = A * M_0^{-1} * 100.$$

Test der katalytischen Aktivität

Die hergestellten Katalysatoren wurden in einem Festbettprüfstand, bestehend aus einem Reaktor mit einem beheizbaren Quarzglasrohr, getestet.

Vor der Umsetzung wurden die Katalysatorträger in den Prüfstand eingebaut und unter Wasserstoff bei 550 °C aktiviert. Nach der Aktivierung wurde das Katalysatormaterial im Stickstoffstrom (100 mL/min) auf die jeweilige Reaktionstemperatur aufgeheizt. Nach einer 10-minütigen Temperierungsphase wurde ein Gasgemisch ($NH_3$-$N_2$-Mischung im Verhältnis 9:1) über das Katalysatormaterial geleitet. Am Reaktorausgang wurden mit einer gasdichten Spritze Gasproben entnommen und gaschromatographisch das Stickstoff-Wasserstoff-Verhältnis bestimmt.

Anhand der nachfolgenden Beispiele wird die Erfindung eingehender erläutert. Die Beispiele sind jedoch nicht als einschränkend zu verstehen.

Für das Vergleichsbeispiel (VB) wurden $\gamma$-$Al_2O_3$ Kugeln mit einem Durchmesser von 2,5 mm, einer BET-Oberfläche von 215 m$^2$/g und einem Porenvolumen von 0,8 mL/g verwendet. Die Kugeln wurden zunächst mit einer Lösung von NaOH vorbehandelt und im Anschluss getrocknet.

Für die erfindungsgemäßen Beispiele (EB) wurden $\gamma$-$Al_2O_3$-Zylinder mit einem Außendurchmesser von 12 mm und 7 Kanälen mit einem Innendurchmesser von jeweils 2 mm verwendet, die ebenfalls mit NaOH vorbehandelt wurden. Die BET-Oberfläche der Trägerkörper betrug 105 m$^2$/g und das Porenvolumen 0,6 mL/g.

Die Beladung mit Ruthenium betrug in allen Beispielen 1,5 Gew.-%.

VB - (Ru/$Al_2O_3$ mit $RuCl_3$)

Die vorbehandelten $Al_2O_3$-Kugeln wurden mit einer Lösung von Ru-Chlorid ($RuCl_3$) imprägniert und getrocknet (30 min bei 70 °C). Zur Kalzinierung wurde das getrocknete Material in einem Ofen bei 450 °C für 4 h behandelt. Das mit Ru ausgestattete $Al_2O_3$ wurde 4 Tage lang unter Durchfluss von Wasser gewaschen. Schließlich wurde das Material getrocknet und abschließend unter Formiergas in einem Ofen bei 250 °C für 16 h reduziert.

EB1 (Ru/$Al_2O_3$ mit $RuCl_3$)

Die vorbehandelten $Al_2O_3$-Zylinder wurden analog VB mit Ruthenium ausgestattet.

EB2 (Ru/$Al_2O_3$ mit Ru-Nitrosyloxalat)

Die vorbehandelten $Al_2O_3$-Zylinder wurden mit einer Lösung von Ru-Nitrosyloxalat imprägniert und getrocknet (30 min bei 70 °C). Zur Kalzinierung wurde das zuvor getrocknete Material in einem Ofen bei 450 °C für 4 h behandelt. Abschließend wurde das Material unter Formiergas in einem Ofen bei 250 °C für 16 h reduziert.

EB3 (Ru/$Al_2O_3$ mit Ru-Oxalat)

Die vorbehandelten $Al_2O_3$-Zylinder wurden mit einer Lösung von Ru-Oxalat imprägniert und getrocknet (30 min bei 70 °C). Die Kalzinierung und Reduktion erfolgte analog zu EB2.

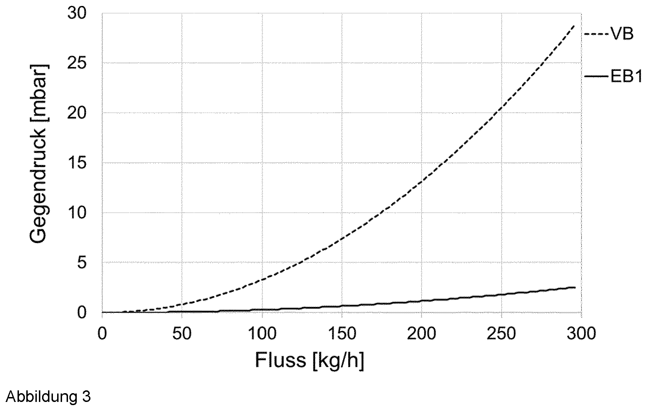

Abbildung 3 zeigt den Druckverlust von Katalysatorschüttungen mit Trägerkörpern mit Kanälen (EB1) im Vergleich zu Trägerkörpern ohne Kanäle (VB). Kugelförmige Vollkugeln verursachen gegenüber Trägerkörpern mit einem zentralen Kanal und sechs weiteren um diese angeordneten Kanälen einen deutlich höheren Druckverlust, was sich negativ auf die Effizient eines Reaktors mit einer solchen Katalysatorschüttung auswirkt.

**Patentansprüche**

1. Verfahren zur Herstellung von Wasserstoff aus einem Ammoniak-haltigen Gas, umfassend die folgenden Schritte

    i) Bereitstellen eines Trägerkatalysators in Form eines mit Ruthenium-ausgestatteten Trägerkörpers, wobei der Trägerkörper

        - als Trägermaterial ein refraktäres Oxid umfasst,
        - zylinderförmig ist und

- mindestens drei voneinander beabstandete Kanäle aufweist, die sich vollständig durch den Trägerkörper erstrecken, wobei einer der Kanäle sich entlang einer zentralen Längsachse erstreckt,

ii) Kontaktieren des Trägerkatalysators mit dem Ammoniak-haltigen Gas.

2. Verfahren gemäß Anspruch 1, wobei das Ammoniak-haltige Gas mindestens 70 Vol.-% Ammoniak enthält.

3. Verfahren gemäß Anspruch 1 oder 2, wobei der Trägerkörper 3 bis 10 Kanäle aufweist.

4. Verfahren gemäß einem der vorangegangenen Ansprüche, wobei der Trägerkörper eine Länge und/oder einen Außendurchmesser im Bereich von 0,5 mm bis 50 mm aufweist.

5. Verfahren gemäß einem der vorangegangenen Ansprüche, wobei die Querschnittsfläche der Kanäle in einem Bereich von 0,3 mm$^2$ bis 15 mm$^2$ liegt.

6. Verfahren gemäß einem der vorangegangenen Ansprüche, wobei der Anteil der Kanalquerschnittsflächen an der Gesamtquerschnittsfläche des Trägerkörpers mindestens 10 % beträgt.

7. Verfahren gemäß einem der vorangegangenen Ansprüche, wobei der Trägerkörper mindestens eine gewölbte Stirnseite aufweist.

8. Verfahren gemäß einem der vorangegangenen Ansprüche, wobei der Trägerkatalysator mit nicht mehr als 20 Gew.-% Ruthenium ausgestattet ist.

9. Verfahren gemäß einem der vorangegangenen Ansprüche, wobei der Trägerkatalysator mit mindestens einem Alkalimetall oder Erdalkalimetall ausgestattet ist.

10. Verfahren gemäß Anspruch 9, wobei Ruthenium und das Alkalimetall oder Erdalkalimetall in einem molaren Verhältnis im Bereich von 1:1 bis 1:15 vorliegen.

11. Verfahren gemäß einem der vorangegangenen Ansprüche, wobei das refraktäre Oxid ausgewählt ist aus der Gruppe bestehend aus Aluminiumoxid, Magnesiumoxid, Siliziumoxid, Molybdänoxid, Wolframoxid, Titanoxid, Zirkonoxid, Kombinationen, Mischoxiden und Verbundoxiden von zwei oder mehr der vorstehend genannten Metalloxide.

12. Verfahren gemäß einem der vorangegangenen Ansprüche, wobei es sich bei dem Trägerkatalysator um einen Schalenkatalysator handelt.

13. Verfahren gemäß Anspruch 12, wobei der Schalenkatalysator einen Randbereich umfasst, der eine Dicke von weniger als 1000 $\mu$m aufweist.

14. Verfahren gemäß einem der vorangegangenen Ansprüche, wobei die Kontaktierung bei einem Druck im Bereich von 1 bis 300 bar erfolgt.

15. Verwendung eines Ruthenium-haltigen Trägerkatalysators in einem Verfahren zur Herstellung von Wasserstoff aus einem Ammoniak-haltigen Gas durch Kontaktieren des Trägerkatalysators mit dem Ammoniak-haltigen Gas, wobei der Trägerkatalysator in Form eines mit Ruthenium-ausgestatteten Trägerkörpers bereitgestellt wird, wobei der Trägerkörper

- als Trägermaterial ein refraktäres Oxid umfasst,
- zylinderförmig ist und
- mindestens drei voneinander beabstandete Kanäle aufweist, die sich vollständig durch den Katalysatorträger erstrecken, wobei einer der Kanäle sich entlang der zentralen Längsachse erstreckt.

Abbildung 1

Abbildung 2

Abbildung 3

Europäisches
Patentamt

European
Patent Office

Office européen
des brevets

# EUROPÄISCHER RECHERCHENBERICHT

**Nummer der Anmeldung**

EP 23 19 7090

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2023/111017 A1 (BASF SE [DE]) 22. Juni 2023 (2023-06-22) * Beispiele * * Abbildung 4 * * Seite 10, Zeile 7 - Seite 11, Zeile 25 * * "Embodiments" 60. bis 69., S. 18-20 * * Seite 8, Zeile 19 - Zeile 27 * ----- | 1-15 | INV. C01B3/04 B01J35/55 |
| A | G. Ertl et al.: "Handbook of heterogeneous catalysis", , Bd. 1 15. März 2008 (2008-03-15), XP002811015, Gefunden im Internet: URL:https://onlinelibrary.wiley.com/cms/asset/f7b65370-96c4-43c4-9bbe-427c14c057b2/9783527610044.cover.jpg [gefunden am 2024-02-14] * Bucheinband * ----- | 1-15 | |
| A | WO 2023/063640 A1 (WONIK MAT CO LTD [KR]) 20. April 2023 (2023-04-20) * Beispiele * * Absatz [0021] * * Absatz [0027] * ----- | 1-15 | **RECHERCHIERTE SACHGEBIETE (IPC)** C01B B01J |
| A,D | WO 2019/188219 A1 (SHOWA DENKO KK [JP]) 3. Oktober 2019 (2019-10-03) * Beispiele * ----- | 1-15 | |
| A | WO 2021/137643 A1 (WONIK MAT CO LTD [KR]; KOREA INST SCI & TECH [KR]) 8. Juli 2021 (2021-07-08) * das ganze Dokument * -/-- | 1-15 | |

Der vorliegende Recherchenbericht wurde für alle Patentansprüche erstellt

| Recherchenort | Abschlußdatum der Recherche | Prüfer |
|---|---|---|
| München | 14. Februar 2024 | Omegna, Anna |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**Seite 1 von 2**

Europäisches
Patentamt

European
Patent Office

Office européen
des brevets

**Nummer der Anmeldung**

**EP 23 19 7090**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| | & EP 4 085 997 A1 (WONIK MAT CO LTD [KR]; KOREA INST SCI & TECH [KR]) 9. November 2022 (2022-11-09) * Beispiele * * Absätze [0059] - [0063] * ----- | | |
| A,D | DE 15 33 088 A1 (INT NICKEL LTD) 4. Dezember 1969 (1969-12-04) * das ganze Dokument * ----- | 1-15 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 14. Februar 2024 | Omegna, Anna |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                EP 23 19 7090

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-02-2024

| Im Recherchenbericht angeführtes Patentdokument | Datum der Veröffentlichung | Mitglied(er) der Patentfamilie | Datum der Veröffentlichung |
|---|---|---|---|
| WO 2023111017 A1 | 22-06-2023 | KEINE | |
| WO 2023063640 A1 | 20-04-2023 | KR 20230053770 A | 24-04-2023 |
| | | WO 2023063640 A1 | 20-04-2023 |
| WO 2019188219 A1 | 03-10-2019 | JP 7264154 B2 | 25-04-2023 |
| | | JP 2023076661 A | 01-06-2023 |
| | | JP WO2019188219 A1 | 11-03-2021 |
| | | WO 2019188219 A1 | 03-10-2019 |
| WO 2021137643 A1 | 08-07-2021 | CN 114929381 A | 19-08-2022 |
| | | EP 4085997 A1 | 09-11-2022 |
| | | JP 7400111 B2 | 18-12-2023 |
| | | JP 2023517265 A | 25-04-2023 |
| | | KR 20220113419 A | 12-08-2022 |
| | | US 2023041936 A1 | 09-02-2023 |
| | | WO 2021137643 A1 | 08-07-2021 |
| DE 1533088 A1 | 04-12-1969 | BE 691550 A | 21-06-1967 |
| | | DE 1533088 A1 | 04-12-1969 |
| | | FR 1505252 A | 08-12-1967 |
| | | GB 1109890 A | 18-04-1968 |
| | | NL 6617910 A | 22-06-1967 |
| | | SE 304251 B | 23-09-1968 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP H1085601 A
- WO 2019188219 A1
- DE 102007014914 A1
- DE 1533088 A1

**In der Beschreibung aufgeführte Nicht-Patentliteratur**

- **AMANO** ; **TAYLOR**. die Eignung von auf Al2O3-geträgertem Ruthenium für diese Reaktion. *J. Am. Chem. Soc.*, 1954, vol. 76 (16), 4201-4204